# DEMANDE DE BREVET EUROPEEN

(11) **EP 4 576 658 A1**
(43) Date de publication de la demande: **25.06.2025**
(21) Numéro de dépôt: 24220275.2
(22) Date de dépôt: 16.12.2024
(51) Int. Cl.: H04L 9/32, H04L 9/00

(54) **PROCÉDÉ D'ATTESTATION À DISTANCE DÉCENTRALISÉ**

(30) Priorité: 21.12.2023 FR 2314767
(71) Demandeur: Commissariat à l'Energie Atomique et aux Energies Alternatives, 75015 Paris (FR)
(72) Inventeur: HENNEBERT, Christine, 38054 Grenoble cedex 09 (FR)
(74) Mandataire: Brevalex

(57) **Abrégé**

L'invention concerne un procédé d'attestation à distance décentralisé, attestant l'authenticité d'un pair Attester (20) au sein d'un réseau de pairs partageant un registre (50), impliquant un pair Vérifier (30) et un dispositif Oracle (40) comportant une enclave sécurisée et un générateur de nombres aléatoires. L'Attester (30) publie une clé publique dans le registre (50). L'Oracle (40) génère un nombre aléatoire unique et une clé de chiffrement, puis chiffre le nombre aléatoire et l'envoi via un canal sécurisé au Vérifier. L'oracle (40) publie le nombre aléatoire chiffré dans le registre (50). Le Vérifier (30), génère un challenge en utilisant le nombre aléatoire et la clé publique et publie le challenge dans le registre. L'Attester (20), résout le challenge grâce à la clé privée et publie une preuve dans le registre (50). Après la publication de la preuve dans le registre (50), l'Oracle (40) publie la clé de chiffrement.

## Description

### Domaine technique de l'invention

L'invention a pour objet un procédé d'attestation à distance décentralisé. L'invention concerne en particulier l'attestation à distance de dispositifs, appelé pairs dans le présent texte, connectés dans un réseau décentralisé. L'invention concerne également un procédé de vérification de l'authenticité d'un pair.

### Technique antérieure

L'attestation à distance « Remote Attestation » est un service de sécurité dans lequel un dispositif, appelé « vérifier », vérifie l'intégrité et l'authenticité d'un autre dispositif, appelé « attester » à distance. L'objectif est de s'assurer que le système distant n'a pas été compromis par des logiciels malveillants ou des modifications non autorisées.

Ce service de sécurité implique généralement de la part du dispositif vérifier, la création d'un challenge cryptographique contenant un secret (généralement un nombre aléatoire). Le dispositif attester résout ensuite ce challenge pour démontrer son authenticité et son intégrité.

Une attestation à distance implique donc nécessairement l'utilisation de ressource de calcul et de mémoire de la part des dispositifs attester et vérifier.

Un réseau de pairs, aussi appelé réseau pair-à-pair (P2P) décentralisé est un modèle de réseau informatique où chaque dispositif participant, appelé pair agit à la fois comme client et serveur, partageant ses ressources (comme la bande passante, l'espace de stockage ou la puissance de calcul) directement avec les autres pairs sans nécessiter un serveur central ou une autorité administrative.

Dans un réseau de pair, les pairs sont autonomes et prennent des décisions individuelles concernant la façon dont ils partagent les données et avec qui ils communiquent. Également, Les fichiers ou les données sont distribués à travers le réseau, parfois de manière redondante, ce qui augmente la résilience et la disponibilité.

L'absence de point central de contrôle ou de défaillance rend le réseau robuste contre les pannes et les attaques ciblées car il n'y a pas de cible unique qui pourrait désactiver le réseau en entier.

Un réseau P2P décentralisé a la capacité de s'organiser et de s'optimiser sans intervention externe. Les algorithmes internes gèrent des aspects tels que le routage, la découverte de ressources et la réplication de données.

Les réseaux P2P décentralisés sont particulièrement populaires pour des applications comme le partage de fichiers, les systèmes de communication, les systèmes de stockage distribué et les cryptomonnaies. Ils peuvent cependant poser des défis en matière de sécurité, de fiabilité et de performance pour certaines utilisations.

L'implémentation d'attestations à distance entre les pairs d'un réseau décentralisé permet donc de répondre à la problématique de sécurité inhérente aux réseaux de pair décentralisé.

Cependant, l'attestation à distance telle que pratiquée généralement, nécessite pour qu'un pair i puisse établir que le pair j soit de confiance que les pairs i et j réalisent une attestation à distance avec le pair i dans le rôle de vérifier et le pair j dans le rôle d'attester. Un réseau comportant de nombreux pairs nécessitera donc d'importantes ressources informatiques dédiées à la sécurité pour que les pairs puissent s'attester deux à deux.

L'art antérieur propose plusieurs protocoles pour adresser cette problématique :
L'attestation en « essaim » [Ref. 1] consiste à attester un réseau de dispositifs de telle façon que la vérification soit plus efficace lors de la vérification d'un ensemble de dispositifs « attester », que la vérification de chaque dispositif individuellement. Généralement, les attestations en « essaim » sont utilisées dans de larges réseaux de pairs pour gagner en efficacité. De nombreux travaux basés sur l'usage d'un dispositif « vérifier » centralisé, comme SEDA [Ref. 2], LISA [Ref. 3], SHela [Ref. 4], EAPA [Ref. 5], SAP [Ref. 6], WISE [Ref. 7], CoRA [Ref. 8]ou encore FADIA [Ref. 9] collectent les attestations de plusieurs « attester » et les agrègent selon une structure d'arbre pour les acheminer plus efficacement jusqu'au dispositif « vérifier ». Les techniques telles que DARPA [Ref. 10], SCAPI [Ref. 11], slimloT [Ref. 12] ou PROVE [Ref. 13] introduisent en plus un mécanisme visant à garantir la légitimité des dispositifs « attester » et à surveiller leur présence dans l'essaim. D'autres travaux, notamment DIAT [Ref. 14], US-AID [Ref. 15], ESDRA [Ref. 16] ou PASTA [Ref. 17], considèrent que les dispositifs « vérifier » sont des pairs du réseau, capables d'attester de façon autonome leurs voisins. Cependant, le résultat de l'attestation n'est pas publiquement vérifiable, conduisant chaque pair agissant comme « vérifier » à effectuer intégralement le protocole.

Le protocole d'attestation en essaim SANA [Ref. 18] s'appuie sur un schéma multi-signature pour agréger les résultats de l'attestation au sein d'un grand groupe de dispositifs. Dans SANA, chaque appareil est doté d'une paire de clés asymétriques. Chaque « attester » utilise sa clé secrète pour signer son attestation. Les attestations sont ensuite agrégées et peuvent être vérifiées par n'importe quel pair « vérifier » connaissant la clé publique des dispositifs « attester ». Cependant, SANA ne donne pas de détail sur la génération du challenge (credential) que le dispositif « attester » (appelé « prover » dans SANA) signe pour attester de sa légitimité. La génération de ce challenge, qui inclut un Nonce secret, est cruciale pour éviter les attaques par rejeu. Par ailleurs, l'agrégation des attestations au sein du réseau rend le réseau peu dynamique et peu évolutif. En outre, il n'est pas indiqué comment les dispositifs sont authentifiés.

PERMANENT [Ref. 19] est un protocole qui s'appuie sur la technologie de chaine de blocs « blockchain » pour rendre l'attestation à distance publiquement vérifiable. Le protocole PERMANENT considère un réseau pair-à-pair de dispositifs non fiables où les participants peuvent jouer les rôles d' « attester » et de « vérifier » de manière interchangeable. Mais ce protocole est implémenté au niveau du consensus entre pairs, qui est l'élément qui assure la disponibilité de la chaine de blocs. Dans le cas de PERMANENT, ce consensus est fermé, c'est-à-dire qu'il n'est plus possible d'ajouter un dispositif au consensus une fois que la blockchain est démarrée. Cela rend cette solution difficile à maintenir et ne permet pas de passer à l'échelle (impossible d'ajouter de nouveaux pairs ou d'en retirer).

Le protocole PROVE vise l'objectif de fournir une solution permettant la vérifiabilité publique des attestations au sein d'un réseau de dispositifs distribués, grâce à un mécanisme de publication/souscription, sans reposer sur l'usage d'une infrastructure de clé publique « PKI », et sans envoyer de requête d'attestation au pair « attester ». PROVE repose sur l'usage d'un agent « broker » qui transmet aux dispositifs « vérifier » abonnés les attestations publiées par les dispositifs « attester ».

Déployés dans des réseaux distribués à large échelle, ces protocoles sont délicats à utiliser car ils requièrent la synchronicité des dispositifs.

Le protocole SCRAPS [Ref. 20] fonctionne en revanche au sein d'un réseau de dispositifs de façon asynchrone grâce à l'usage d'une chaine de blocs. La vérification de l'attestation est déléguée à un contrat intelligent « smart contract » qui agit comme un pair « vérifier » mandataire. Le secret est une valeur horodatée, générée par la chaine de blocs et connue de tous les pairs du réseau. Le dispositif « attester » génère une attestation au sein d'un composant matériel de sécurité et envoie l'attestation à un contrat intelligent sous la forme d'une transaction signée par sa clé privée. Le contrat intelligent exécute le processus de vérification sur la chaine de blocs. Pour que la transaction entrante soit valide, le fabricant du composant de sécurité doit déployer son contrat intelligent dans la chaine de blocs du réseau. Il doit enregistrer la clé publique de chaque composant de sécurité utilisé par les pairs dans la chaine de blocs. Enfin, il doit déployer le schéma d'attestation supporté par les composants au niveau de l'agent. La mise en oeuvre de cette solution en devient extrêmement lourde, le fabricant des composants de sécurité devant s'impliquer dans les chaines de blocs de tous les réseaux de pairs utilisant cette solution.

### Références

[Ref. 1] Ambrosin M., Conti M., Lazzeretti R., Rabbani M.M., Ranise S., "Collective remote attestation at the internet of things scale: State-of-the-art and future challenges", IEEE Communication Survey and Tutorials, 2020, vol 22, n°4
[Ref. 2] Asokan N., Brasser F., Ibrahim A., Sadeghi A.-R., Schunter M., Tsudik G., et al., "SEDA: Scalable embedded device attestation", In Proceedings of the 22nd ACM SIGSAC conférence on computer and communications security, 2015
[Ref. 3]Carpent X., El Defrawy K., Rattanavipanon N., Tsudik G., "Llghtweight Swarm Attestation: a tale of two LISA-s", In Proceedings ACM on Asia conférence on computer and communications security, 2017, pp. 86-100
[Ref. 4]Rabbani M.M., Vliegen J., Winderickx J., Conti M., Mentens N., "SHeLA: Scalable heterogeneous layered attestation", IEEE Internet Things Journal, 2019, vol 6, n°6
[Ref. 5]Yan W., Fu A., Mu Y., Zhe X., Yu S., Kuang B., "EAPA: Efficient attestation résilient to physical attacks for IoT devices", In Proceedings of the 2nd international ACM workshop on security and privacy for the internet-of-things, 2019, pp. 2-7
[Ref. 6]De Oliveira Nunes I., Dessouky G., Ibrahim A., Rattanavipanon N., Sadeghi A.-R., Tsudik G., "Towards systematic design of collective remote attestation protocols", In IEEE 39th international conférence on distributed computing systems", 2019, http://dx.doi.org/10.1109/ICDCS.2019.00120
[Ref. 7]Ammar M., Crispo B., "WISE: A lightweight intelligent swarm attestation scheme for the internet of things", ACM Trans Internet Things, 2020; vol 1, n°3, http://dx.doi.org/10.1145/3386688
[Ref. 8]Diop A., Laurent M., Leneutre J., Traoré J., "CoRA: A scalable collective remote attestation protocol for sensor networks", In Furnell S., Mori P., Weippl E. R., Camp O., In Proceedings of the 6th international conférence on information systems security and privacy, SCITEPRESS; 2020, pp. 84-95, http://dx.doi.org/10.5220/0008962700840095
[Ref. 9]Mansouri M., Jaballah W.B., Önen M., Rabbani M.M., Conti M., "FADIA: Fairness driven collaborative remote attestation", In Proceedings 14th ACM conférence on security and privacy in wireless and mobile networks, 2021, pp. 60-71
[Ref. 10]Ibrahim A., Sadeghi A.-R., Tsudik G., Zeitouni S., "DARPA: Device attestation résilient to physical attacks", In Proceedings of the 9th ACM conférence on security and privacy in wireless and mobile networks, 2016, pp. 171-82
[Ref. 11]Kohnhäuser F., Büscher N., Gabmeyer S., Katzenbeisser S., "SCAPI: a scalable attestation protocol to detect software and physical attacks", In Proceedings 10th ACM conférence on security and privacy in wireless and mobile networks, 2017, pp. 75-86
[Ref. 12]Ammar M., Washha M., Ramabhadran G.S., Crispo B., "SlimloT: Scalable lightweight attestation protocol for the internet of things", In IEEE conférence on dependable and secure computing, 2018, pp. 1-8, http://dx.doi.org/10.1109/DESEC.2018.8625142
[Ref. 13] Edlira Dushku, Md. Masoom Rabbani, Jo Vliegen, An Braeken, Nele Mentens, "PROVE: Provable remote attestation for public verifiability", Elseiver, Journal of Information Security and Applications, vol. 75, june 2023, 103448, https://www.sciencedirect.com/science/article/pii/S2214212623000327
[Ref. 14] Abera T., Bahmani R., Brasser F., Ibrahim A., Sadeghi A., Schunter M., "DIAT: Data integrity attestation for résilient collaboration of autonomous system", In 26th annual network & distributed system security symposium", 2019
[Ref. 15] Ibrahim A., Sadeghi A.-R., Tsudik G., "US-AID: Unattended scalable attestation of IoT devices", In IEEE 37th symposium on reliable distributed systems", 2018, pp. 21-30
[Ref. 16] Kuang B., Fu A., Yu S., Yang G., Su M., Zhang Y., "ESDRA: An efficient and secure distributed remote attestation scheme for IoT swarms", IEEE Internet Things Journal, 2019
[Ref. 17] Kohnhäuser F., Büscher N., Katzenbeisser S., "A practical attestation protocol for autonomous embedded systems", In IEEE European symposium on security and privacy, 2019, pp. 263-78
[Ref. 18] Ambrosin M., Conti M., Ibrahim A., Neven G., Sadeghi A.-R., Schunter M., "SANA: Secure and scalable aggregate network attestation", In Proceedings ACM SIGSAC conférence on computer and communications security, 2016
[Ref. 19] Sigurd Frej Joel Jorgensen Ankergard, Dushku, Edlira Dushku, Nicola Dragoni, "PERMANENT: Publicly Verifiable Remote Attestation for Internet of Things Through Blockchain", In: Foundations and Practice of Security (FPS 2021), Lecture Notes in Computer Science, vol 13291, Springer, Cham, https://doi.org/10.1007/978-3-031-08147-7_15
[Ref. 20] Petzi L, Yahya AEB, Dmitrienko A, Tsudik G, Prantl T, Kounev S. SCRAPS: Scalable collective remote attestation for Pub-Sub IoT networks with untrusted proxy vérifier. In: 31st USENIX security symposium. Boston, MA: USENIX Association; 2022, URL https://www.usenix.org/conference/usenixsecurity22/presentation/petzi [Ref. 21] Brevet EP3506557

### Présentation de l'invention

La présente invention remédie aux inconvénients précités en proposant, selon un premier aspect, un procédé d'attestation à distance décentralisé, attestant l'authenticité d'un pair « attester » au sein d'un réseau de pairs partageant un registre. Le procédé d'attestation implique un pair « vérifier » au sein du réseau de pairs et un dispositif « oracle ». Le dispositif « oracle » comporte une enclave sécurisée et un générateur de nombres aléatoires. Le procédé d'attestation comporte les étapes suivantes :
1. génération, par le pair « attester », d'une paire de clés asymétriques comportant une clé privée et une clé publique,
2. publication, par le pair « attester », de la clé publique dans le registre ,
3. génération, par le dispositif « oracle », d'un nombre aléatoire unique et d'une clé de chiffrement,
4. génération, par le dispositif « oracle », d'un nombre aléatoire chiffré à partir du nombre aléatoire unique en utilisant la clé de chiffrement,
5. transmission, par le dispositif « oracle », du nombre aléatoire unique, via un canal de communication sécurisé, au pair « vérifier »,
6. publication, par le dispositif « oracle », du nombre aléatoire chiffré dans le registre,
7. génération, par le pair « vérifier », d'un challenge à partir du nombre aléatoire unique en utilisant la clé publique,
8. publication, par le pair « vérifier », du challenge dans le registre,
9. génération, par le pair « attester », d'une preuve contenant le nombre aléatoire en résolvant le challenge grâce à la clé privée,
10. publication, par le pair « attester », de la preuve dans le registre,
11. après la publication de la preuve dans le registre, publication, par le dispositif « oracle », de la clé de chiffrement dans le registre.

On entend par un réseau de pairs, plusieurs dispositifs connectés à distance par, par exemple, un réseau internet ou GSM ou une combinaison de plusieurs technologies de connexion à distance. Chaque dispositif, appelé pair, du réseau de pair comporte au moins une unité de traitement, une mémoire et un module de communication.

On entend par registre, un registre ou log ou ledger, décentralisé, partagé entre les pairs du réseau de pairs, éventuellement répliqué par chaque pair du réseau de pairs et dans lequel des opérations ou des publications sont enregistrées dans un certain ordre et ne peuvent plus être modifiées une fois enregistrées. Un registre décentralisé peut être réalisé à l'aide d'une technologie comme par exemple une chaine de blocs ou une base de données décentralisée ou un « Directed Acyclic Graph ».

Le nombre aléatoire pourra être conservé secret par l' « oracle » et le pair « vérifier » jusqu'à l'étape 11.

De telles dispositions permettent une attestation de chaque pair du réseau de pairs qui pourra être facilement vérifiée par chacun des autres pairs du réseau de pairs. Cette attestation ne nécessite ni une implication d'un fabricant de dispositif ni l'utilisation d'un bloc de chaine de blocs en tant que nombre aléatoire, aussi appelé secret ou Nonce, ni l'utilisation d'un contrat intelligent en tant que mandataire « vérifier ».

Dans des modes particuliers de mise en oeuvre l'invention peut comporter en outre l'une ou plusieurs des caractéristiques suivantes, prises isolément ou selon toutes les combinaisons techniquement possibles.

Selon un mode de réalisation, le registre est un registre de chaine de blocs.

L'utilisation d'un registre de chaine de blocs, aussi appelé ledger, permet de facilement rendre le registre décentralisé, c'est-à-dire partagé et répliqué, ce qui le rend très difficilement falsifiable.

Selon un mode de réalisation, les étapes 2 à 6 et 9 à 11 sont déclenchées par des pairs du réseau de pairs via l'envoi d'une transaction vers un contrat intelligent déployé dans la chaine de blocs.

L'utilisation d'un contrat intelligent pour déclencher ces étapes permet de décentraliser l'orchestration du procédé d'attestation et évite ainsi des communications supplémentaires entre le pair « attester », le pair « vérifier » et le dispositif « oracle » lors de la réalisation du procédé d'attestation.

Selon un mode de réalisation, le pair « attester » comporte un composant matériel de sécurité et l'étape 1 utilise le composant matériel de sécurité.

L'utilisation d'un composant matériel de sécurité pour la génération d'une paire de clés asymétriques par le pair « attester » permet d'augmenter la sécurité du réseau de pairs en réduisant considérablement le risque d'usurpation de l'identité d'un pair ou la corruption d'un pair.

Selon un mode de réalisation, le composant matériel de sécurité est un composant TPM ,en anglais, Trusted Platform Module, et l'étape 1 comporte la génération d'une clé d'endossement et d'une clé d'attestation.

L'utilisation d'un composant de sécurité TPM, utilisant, par exemple, le protocole TPM 1.2 ou TPM 2.0, permet de disposer d'un composant de sécurité fiable et facilement disponible. Les composants de sécurité TPM permettent également de produire des clés d'endossement dont la certification pourra être vérifiée auprès d'une infrastructure de clé publique ,en anglais, PKI, soit Public Key Infrastructure.

Selon un mode de réalisation, le dispositif « oracle » est un pair du réseau de pairs. Un dispositif « oracle » membre du réseau de pairs en tant que dispositif indépendant permet de facilement sécuriser le dispositif « oracle ».

Selon un mode de réalisation, le pair « vérifier » comporte le dispositif « oracle » dans une application embarquée dans une zone de confiance.

Un dispositif « oracle » embarqué dans chaque pair du réseau de pairs permet de décentraliser la fonction du dispositif « oracle » et d'éviter ainsi un point de panne unique.

Selon un deuxième aspect, la présente invention propose un procédé de vérification à distance décentralisé, vérifiant l'authenticité d'un pair « attester » au sein d'un réseau de pairs partageant un registre. Le procédé de vérification implique un pair « vérifier » et comporte les étapes suivantes :
12. attestation du pair « attester » selon le procédé d'attestation du premier aspect de l'invention,
14. vérification, par le pair « vérifier », de la postérité de la publication de la clé de chiffrement dans le registre par rapport à la publication de la preuve dans le registre,
15. calcul du nombre aléatoire, par le pair « vérifier », à partir du nombre aléatoire chiffré en utilisant la clé de chiffrement,
16. vérification, par le pair « vérifier », de la présence du nombre aléatoire dans la preuve,
17. génération, par le pair « vérifier », d'un challenge de contrôle à partir du nombre aléatoire en utilisant la clé publique,
18. vérification, par le pair « vérifier », de la correspondance entre le challenge de contrôle et le challenge.

Le pair « vérifier » impliqué dans le procédé de vérification peut-être le même pair « vérifier » que le pair « vérifier » du procédé d'attestation ou un autre pair du réseau de pairs. De telles dispositions, permettent de ne réaliser qu'une fois les étapes du procédé d'attestation pour un pair « attester ». Les autres pairs pourront ne réaliser que les étapes du procédé de vérification en tant que pair « vérifier » afin de s'assurer de l'authenticité et de l'intégrité du pair « attester ».

Selon un troisième aspect, la présente invention propose un procédé de vérification à distance décentralisé, vérifiant l'authenticité d'un pair « attester » au sein d'un réseau de pairs partageant un registre. Le pair « attester » comporte un composant matériel de sécurité TPM. Le procédé de vérification implique un pair « vérifier » et comporte les étapes suivantes :
12. attestation du pair « attester » selon le procédé d'attestation du premier aspect de l'invention,
13. vérification, par le pair « vérifier », d'une certification de la clé d'endossement auprès d'une infrastructure publique de clé,
14. vérification, par le pair « vérifier », de la postérité de la publication de la clé de chiffrement dans le registre par rapport à la publication de la preuve dans le registre,
15. calcul du nombre aléatoire, par le pair « vérifier », à partir du nombre aléatoire chiffré en utilisant la clé de chiffrement,
16. vérification, par le pair « vérifier », de la présence du nombre aléatoire dans la preuve,
17. génération, par le pair « vérifier », d'un challenge de contrôle à partir du nombre aléatoire en utilisant la clé publique,
18. vérification, par le pair « vérifier », de la correspondance entre le challenge de contrôle et le challenge.

L'étape de vérification de la certification de la clé d'endossement fournie par le dispositif TPM du pair « attester » permet de s'assurer que le composant TPM est certifié par un fabricant du composant TPM. Cela permet d'augmenter de manière supplémentaire la sécurité du réseau de pairs.

### Présentation des figures

L'invention sera mieux comprise à la lecture de la description suivante, donnée à titre d'exemple nullement limitatif, et faite en se référant aux figures :
[Fig. 1] une représentation schématique d'un exemple du procédé d'attestation selon le premier aspect de l'invention,
[Fig. 2] une représentation schématique d'un exemple du procédé de vérification selon le troisième aspect de l'invention,
[Fig. 3] une représentation schématique d'un exemple de réalisation de procédé de vérification selon le troisième aspect de l'invention,
[Fig. 4] une représentation schématique d'un réseau de pairs dans lequel le dispositif « oracle » est un pair,
[Fig. 5] une représentation schématique d'un réseau de pairs dans lequel chaque pair comporte un dispositif « oracle ».

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée de modes de réalisation particuliers de l'invention

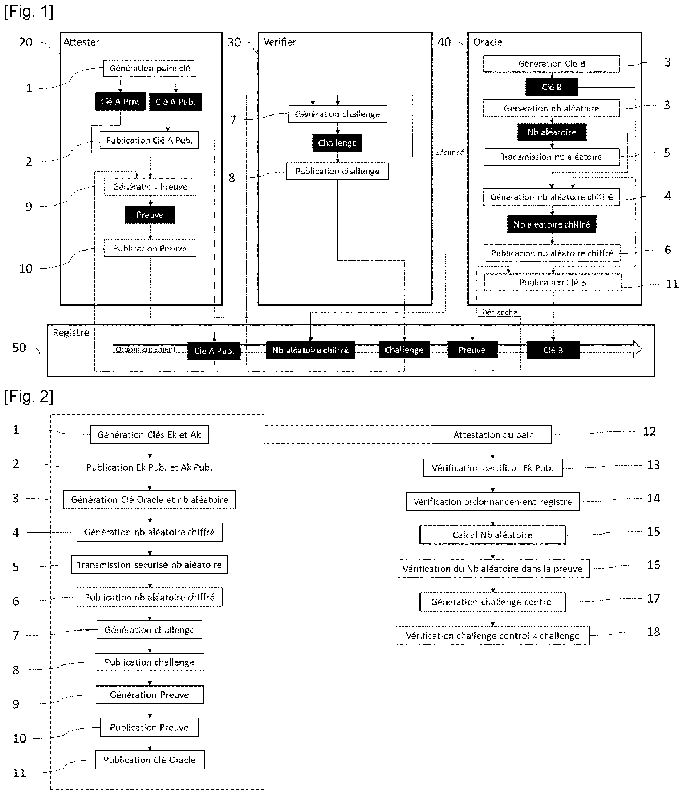

La [Fig. 1] est une représentation schématique d'un exemple de procédé d'attestation selon le premier aspect de l'invention. Un pair « attester » 20, un pair « vérifier » 30, un dispositif « oracle » 40 et un registre 50 sont représentés. Le pair « attester » 20 et le pair « vérifier » 30 sont membres d'un réseau de pairs décentralisés. On entend par pair, par exemple, un dispositif comportant une unité de traitement, une mémoire électronique et un module de communication. Les pairs sont connectés au sein du réseau de pairs par un ou plusieurs moyens de télécommunication. Le réseau de pairs décentralisé pourra par exemple être un réseau IoT « Internet of Things ».

On entend par registre 50, un registre distribué entre les pairs membres du réseau de pairs. Le registre 50 conserve des publications des pairs dans l'ordre de publication, le pair émetteur de la publication étant également enregistré. Tout ou partie du registre pourront être éventuellement répliqué par les pairs du réseau de pairs.

Le dispositif « oracle » 40 est un dispositif indépendant des autres pairs du réseau de pairs et sécurisé. Le dispositif « oracle » 40 comporte une enclave sécurisée et un générateur de nombres aléatoires unique. Le dispositif « oracle » est connecté aux pairs du réseau de pairs et au registre. Le dispositif « oracle » 40 pourra être par exemple un dispositif comportant une unité de traitement, une mémoire électronique et un module de communication.

Le pair « attester » 20 génère 1 une paire de clés comportant une clé A privée et une clé A publique. On entend par paire de clés, une paire de clés cryptographiques asymétriques comportant une clé privée et une clé publique, la clé privée permet de signer un message que seule la clé publique correspondante permet de vérifier. Le pair « vérifier » 30 pourra, par exemple, demander au pair « attester » 20 de procéder à une attestation. Le pair « attester » publie 2 dans un registre 50 la clé A publique.

Le dispositif « oracle » 40 génère 3 une clé de chiffrement, clé B, et un nombre aléatoire. Le nombre aléatoire aussi appelé Nonce ou secret, est un nombre unique qui ne peut pas être prévu par un tier. Le dispositif « oracle » 40 génère 4 un nombre aléatoire chiffré en chiffrant le nombre aléatoire à l'aide de la clé B. Le dispositif « oracle » 40 transmet 5 le nombre aléatoire au pair « vérifier » 30 de manière sécurisée.

L'établissement d'un canal de communication sécurisé entre le dispositif « oracle » 40 et le pair « vérifier » 30 pourra être réalisé, par exemple, à l'aide du protocole TLS « Transport Layer Security ».

Le dispositif « oracle » 40 publie 6 le nombre aléatoire chiffré dans le registre 50. En utilisant la clé A publique, publiée dans le registre par le pair « attester » 20, et le nombre aléatoire, transmis par le dispositif « oracle » 40, le pair « vérifier » 30 génère 7 un challenge.

On entend par challenge, un challenge cryptographique aussi appelé « credential » contenant de manière chiffrée le nombre aléatoire.

Le pair « vérifier » publie 8 le challenge dans le registre 50. Ensuite, le pair « attester » pourra générer 9 une preuve à partir du challenge en utilisant la clé A privée.

On entend par preuve, un message démontrant que le pair « attester » a résolu le challenge. La preuve comporte le nombre aléatoire en clair.

Le pair « attester » publie 10 la preuve dans le registre 50. Une fois la preuve publiée dans le registre 50, le dispositif « oracle » 40 publie la clé de chiffrement, clé B, dans le registre 50.

Le dispositif « oracle » ne doit publier la clé de chiffrement qu'après la publication de la preuve par le dispositif « attester ». Sinon, un tier pourrait usurper l'identité du pair « attester » en produisant une preuve contenant le nombre aléatoire sans avoir résolu le challenge, simplement en déchiffrant le nombre aléatoire chiffré déjà publié.

Le dispositif « oracle » 40 pourra par exemple être notifié par le registre 50 de la publication de la preuve par le pair « attester », ou être notifié directement par le pair « attester ». Dans un autre exemple, le dispositif « oracle » 40 pourra surveiller le registre et publier la clé lorsqu'il aura observé la publication de la preuve.

Une fois le procédé d'attestation réalisé, le registre 50 contient l'ensemble des publications dans l'ordre suivant :
- publication par le pair « attester » 20 de la clé publique,
- publication par le dispositif « oracle » 40 du nombre aléatoire,
- publication par le pair « vérifier » 30 du challenge,
- publication par le pair « attester » 20 de la preuve,
- publication par le dispositif « oracle » 20 de la clé de chiffrement.

Chaque pair du réseau de pairs pourra ensuite consulter le registre 50 et vérifier la validité de l'attestation pour s'assurer de l'authenticité du pair « attester » 20 sans que le pair « attester » 20 ne doive résoudre de nouveaux challenges cryptographiques. De cette manière, la sécurité du réseau de pairs pourra être assurée en nécessitant moins de ressources de calcul qu'en utilisant un procédé d'attestation de l'art antérieur.

La [Fig. 2] est une représentation schématique d'un exemple de procédé de vérification selon le troisième aspect de l'invention. La [Fig. 2] représente également les étapes d'un exemple de procédé de vérification selon le deuxième aspect de l'invention. Le procédé de vérification selon le deuxième aspect de l'invention débute par l'attestation 12 d'un pair « attester » du réseau de pairs. L'attestation 12 se déroule selon le premier aspect de l'invention. Ensuite, un pair « vérifier » vérifie 14 que la publication de la clé de chiffrement dans le registre est postérieure à la publication de la preuve. De cette manière, le pair « vérifier » s'assure que le pair « attester », lors de son attestation, n'avait pas connaissance du nombre aléatoire lors de la résolution du challenge. Le pair « vérifier » du procédé de vérification selon le deuxième ou le troisième aspect de l'invention peut-être le même pair que le pair « vérifier » ayant réalisé le procédé d'attestation selon le premier aspect de l'invention. Le pair « vérifier » du procédé de vérification selon le deuxième ou troisième aspect de l'invention peut aussi être un autre pair du réseau de pairs que le pair « vérifier » du procédé d'attestation. De cette manière, un pair cherchant à s'assurer de l'authenticité et/ou de l'intégrité d'un autre pair du réseau de pairs pourra ne réaliser que le procédé de vérification si le pair dont on cherche à s'assurer de l'authenticité et/ou de l'intégrité a déjà réalisé le procédé d'attestation avec un autre pair « vérifier ».

Le pair « vérifier » calcule 15 le nombre aléatoire en déchiffrant le nombre aléatoire chiffré présent dans le registre 50 à l'aide de la clé de chiffrement également présente dans le registre.

Après avoir calculé le nombre aléatoire, le pair « vérifier » 30 vérifie 16 que le nombre aléatoire est présent dans la preuve publiée dans le registre par le pair « attester » 20. En utilisant la clé publique et le nombre aléatoire présents dans le registre le pair « vérifier » 30 génère 17 un challenge de contrôle. Le pair « vérifier » 30 vérifie 18 ensuite que le challenge de contrôle correspond bien au challenge publié par le pair « attester » 20 dans le registre lors de la réalisation du procédé d'attestation. De cette manière, le pair « vérifier » 30 s'assure que le pair attester a bien résolu le challenge que seule la possession de la clé privée permettait de résoudre.

Selon un mode de réalisation, chaque pair du réseau de pairs comporte un composant matériel de sécurité. Lorsqu'un pair du réseau de pairs doit attester de son authenticité et/ou de son intégrité, le pair prend le rôle de pair « attester ». Il pourra réaliser l'étape 1 de génération d'une paire de clés asymétriques en utilisant son composant matériel de sécurité ce qui permet de protéger la génération de la paire de clés asymétriques de l'intrusion ou de l'observation par un tier. La clé privée pourra également être conservée au sein du composant matériel de sécurité avec un risque de violation de sécurité réduit.

Selon un mode de réalisation, le composant matériel de sécurité est un composant TPM « Trusted Platform Module », par exemple, un composant TPM 2.0. Le composant de sécurité TPM pourra générer lors de l'étape 1 deux paires de clés asymétriques une paire de clé d'endossement communément noté EK et EK_{pub} ainsi qu'une paire de clé d'attestation AK et AK_{bub}. Dans ce cas, le procédé de vérification pourra comporter une étape de vérification 13 du certificat de la clé publique d'endossement EK_{pub} auprès d'une infrastructure publique de clé. Une telle infrastructure publique de clé est en général rendue accessible par un fabricant de composant de sécurité. Cette étape permettra de s'assurer que le pair attester 20 comporte un composant de sécurité qui a bien été fournie par un fabricant de confiance.

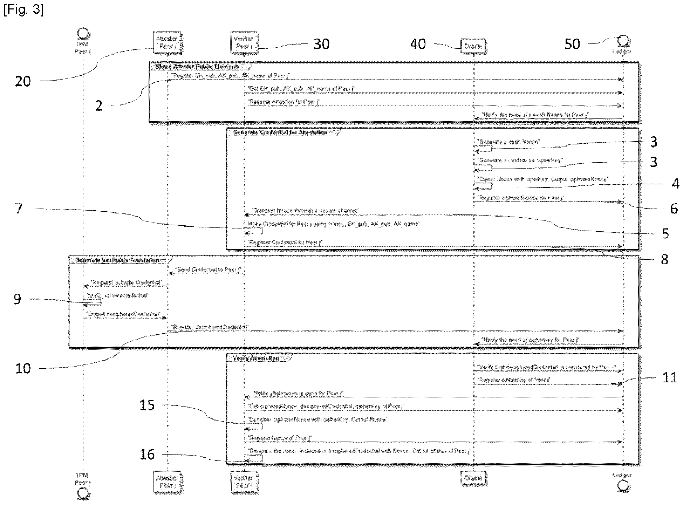

La [Fig. 3] est une représentation schématique d'un exemple de réalisation de procédé de vérification selon le troisième aspect de l'invention.

Le pair « attester » 20, le pair « vérifier » 30, le dispositif « oracle » 40 et le registre 50 sont représentés. Le composant de sécurité TPM du pair « attester » 20 est également représenté. Dans cette représentation schématique le nombre aléatoire est nommé Nonce, la clé de chiffrement, cipherKey, le challenge, Credential et la preuve, decipheredCredential. Les étapes de publications sont indiquées par le terme Register. Dans cet exemple de réalisation, le procédé de vérification comporte une étape supplémentaire de publication par le pair « vérifier » 30 du nombre aléatoire dans le registre 50. Cette étape est indiquée par « Register Nonce of Peer j ». Grâce à cette étape supplémentaire, un autre pair cherchant ultérieurement à s'assurer de l'authenticité/intégrité du pair attester pourra réaliser le procédé de vérification selon l'invention sans calculer 15 le nombre aléatoire, le nombre aléatoire déchiffré étant déjà disponible dans le registre.

Selon un mode de réalisation le registre 50 est un registre de chaine de blocs, aussi appelé « ledger ». La chaine de blocs permet de décentraliser le registre tout en maintenant un bon niveau de sécurité et de fiabilité.

Selon un mode de réalisation, le déclenchement des étapes suivantes du procédé d'attestation pourra être réalisé par un des pairs du réseau de pairs via l'envoi d'une transaction vers un contrat intelligent de la chaine de blocs:
2. publication, par le pair « attester » (30), de la clé publique dans le registre (50),
3. génération, par le dispositif « oracle » (40), d'un nombre aléatoire unique et d'une clé de chiffrement,
4. génération, par le dispositif « oracle » (40), d'un nombre aléatoire chiffré à partir du nombre aléatoire unique en utilisant la clé de chiffrement,
5. transmission, par le dispositif « oracle » (40), du nombre aléatoire unique, via un canal de communication sécurisé, au pair « vérifier » (30),
6. publication, par le dispositif « oracle » (40), du nombre aléatoire chiffré dans le registre(50),
8. publication, par le pair « vérifier » (30), du challenge dans le registre (50),
9. génération, par le pair « attester » (20), d'une preuve contenant le nombre aléatoire en résolvant le challenge grâce à la clé privée,
10. publication, par le pair « attester » (20), de la preuve dans le registre (50),
11. après la publication de la preuve dans le registre (50), publication, par le dispositif « oracle » (40), de la clé de chiffrement dans le registre(50).

L'utilisation d'un contrat intelligent pour déclencher ces étapes, pour éventuellement fournir les instructions de réalisation et pour éventuellement déclencher d'autres étapes du procédé d'attestation ainsi que des étapes du procédé de vérification, permet d'éviter des échanges supplémentaires entre les pairs participants à l'attestation et entre les pairs participants et le dispositif « oracle ». Le contrat intelligent pourra prendre, par exemple, la forme suivante :

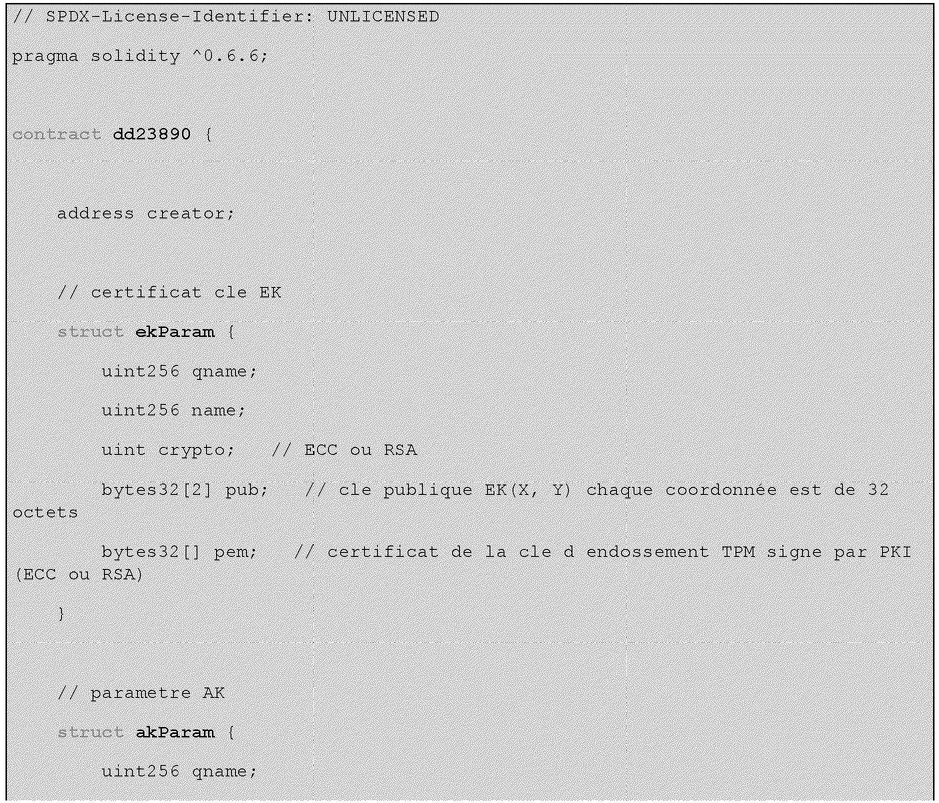

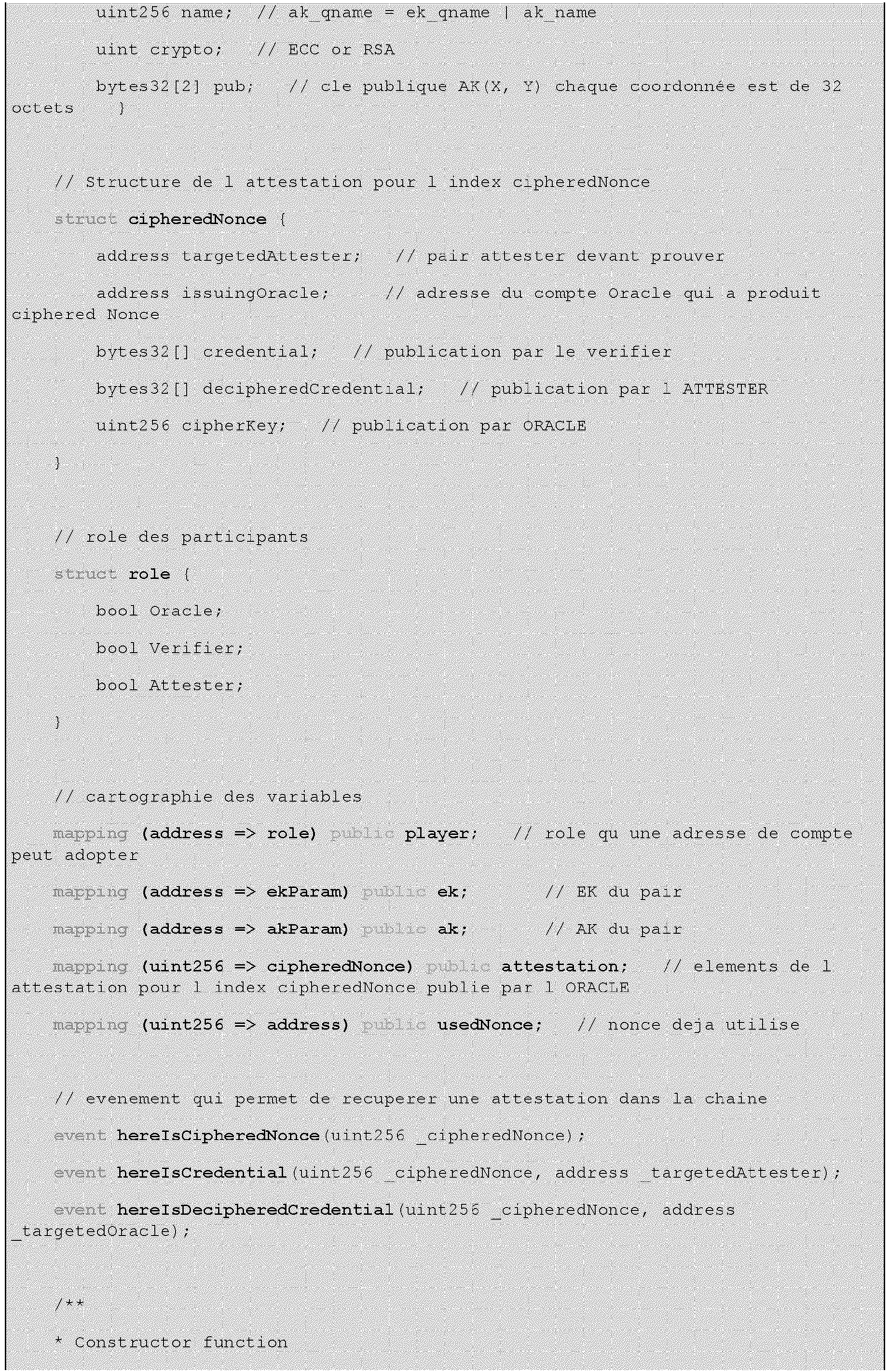

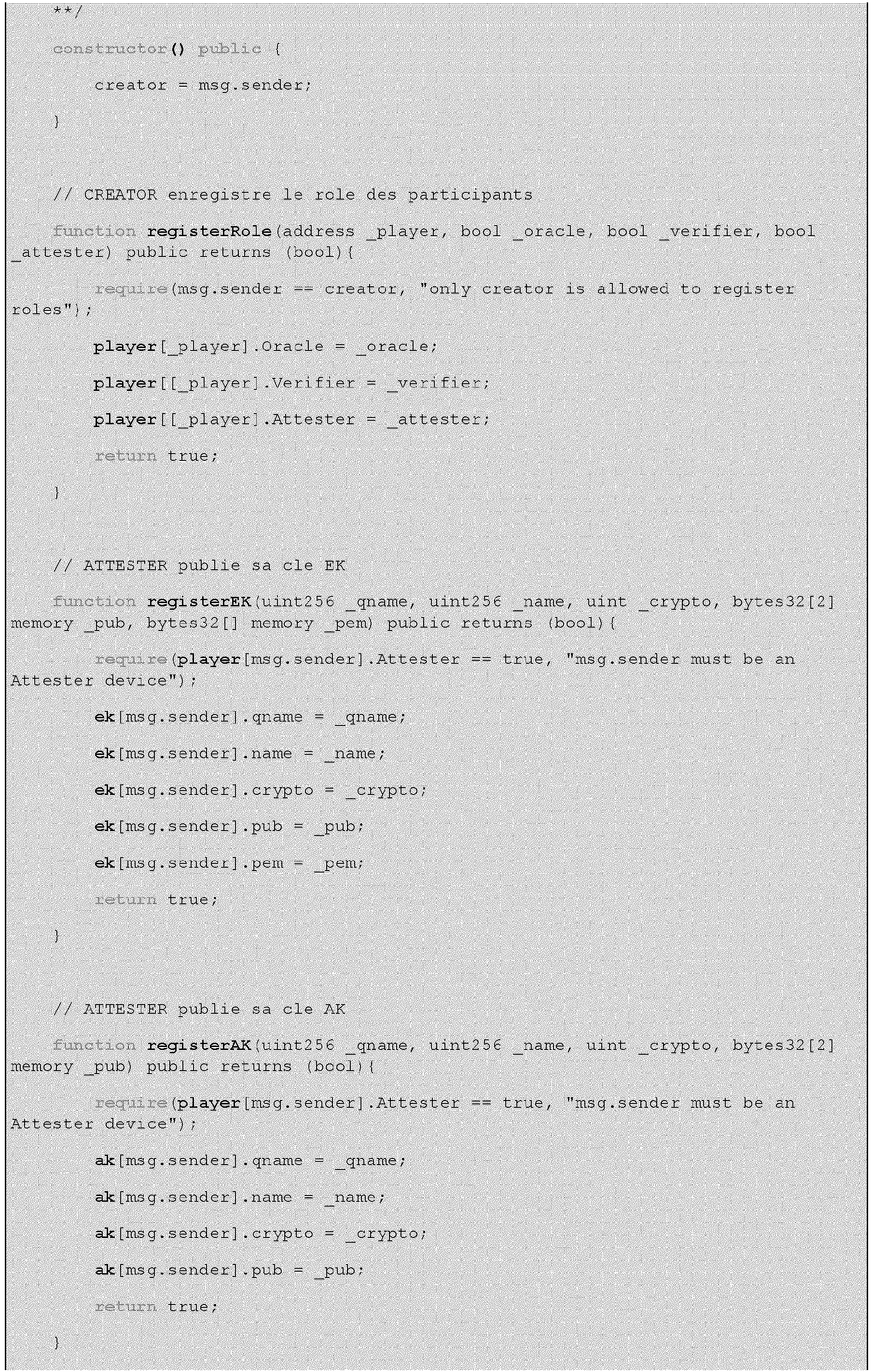

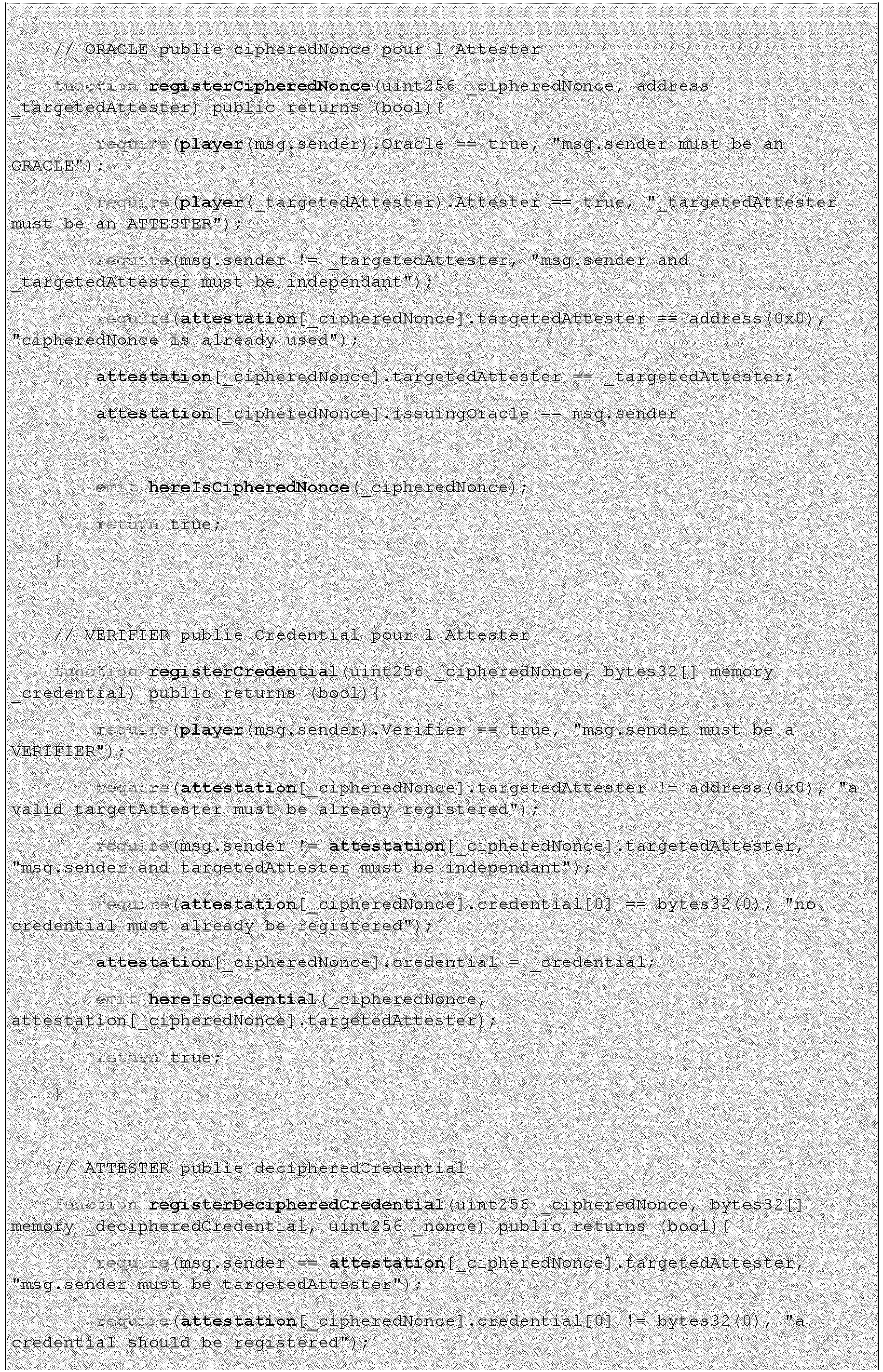

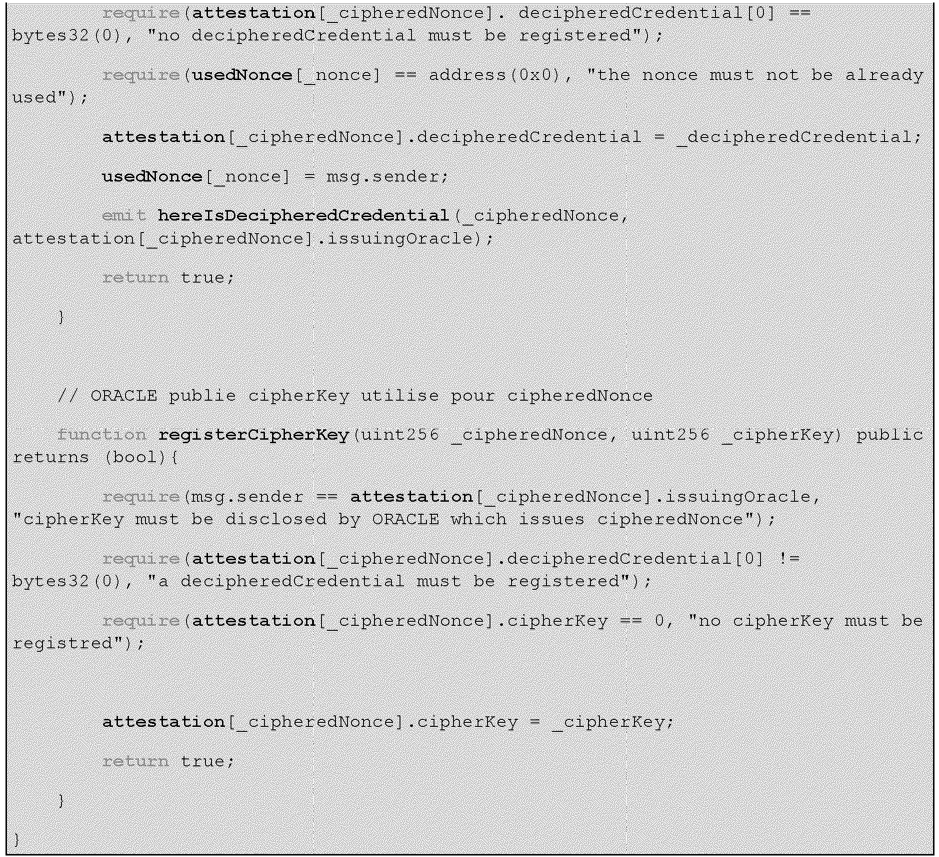

Chaque pair et chaque dispositif « oracle » accède au contrat intelligent grâce à son adresse de compte dans la chaine de blocs. Une entité, nommée « CREATOR » dans le contrat intelligent configure l'adresse de compte de chaque pair/dispositif « oracle » et renseigne le rôle que peut adopter chaque adresse de compte.

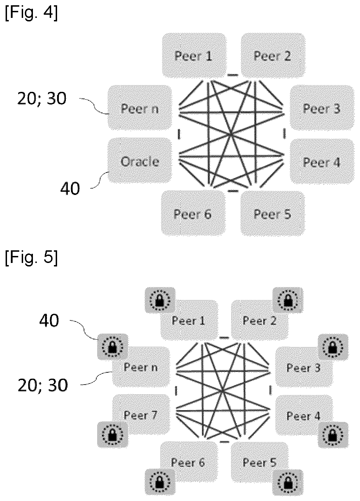

La [Fig. 4] est une représentation schématique d'un réseau de pairs dans lequel le dispositif « oracle » 40 est un pair. Chaque pair du réseau de pairs, indiqué « peer » sur la figure pourra adopter le rôle de pair « vérifier » 30 ou de pair « attester » 20 lors de la réalisation d'un procédé d'attestation ou de vérification selon l'invention. Afin de conserver une attestation avec deux parties, un pair « attester » 20 ne pourra être le pair « vérifier » 30 lors de son attestation ou lors de sa vérification. Le dispositif « oracle » 40 doit pouvoir mettre en place un canal de communication sécurisé avec chaque pair du réseau de pairs afin de pouvoir transmettre le nombre aléatoire de manière confidentielle au pair « vérifier » 30 lors de la réalisation du procédé d'attestation. Ce canal de communication sécurisé pourra, par exemple, s'effectuer grâce à une méthode d'échange de clés par contrat intelligent déployé sur une chaine de blocs [Ref. 21]. Plusieurs dispositifs « oracle » pourront intervenir au sein du réseau de pair avec un mécanisme de sélection du dispositif « oracle » responsable de chaque attestation. De cette manière la robustesse du réseau de pairs pourra être augmentée car la panne d'un dispositif « oracle » n'empêchera plus les pairs du réseau de procéder à des attestations.

La [Fig. 5] est une représentation schématique d'un réseau de pairs dans lequel chaque pair comporte un dispositif « oracle ». Dans ce mode de réalisation le dispositif « oracle » est embarqué dans une zone d'exécution de confiance dans chaque pair du réseau de pairs. Le dispositif « oracle » disposera tout de même d'une identité distincte auprès du registre de celle du pair l'embarquant. Un pair « vérifier » sollicitera son dispositif « oracle » embarqué lors de la réalisation d'un procédé d'attestation selon l'invention. Un procédé de monitoring dynamique pourra être mis en place pour garantir l'authenticité du dispositif « oracle » embarqué lors de chaque publication.

## Revendications

1. Procédé d'attestation à distance décentralisé, attestant l'authenticité d'un pair « attester » (20) au sein d'un réseau de pairs partageant un registre (50), impliquant un pair « vérifier » (30) au sein du réseau de pairs et impliquant un dispositif « oracle » (40), le dispositif « oracle » (40) comporte une enclave sécurisée et un générateur de nombres aléatoires, le procédé d'attestation comporte les étapes suivantes :
1.génération, par le pair « attester » (20), d'une paire de clés asymétriques comportant une clé privée et une clé publique,
2.publication, par le pair « attester » (30), de la clé publique dans le registre (50),
3.génération, par le dispositif « oracle » (40), d'un nombre aléatoire unique et d'une clé de chiffrement,
4.génération, par le dispositif « oracle » (40), d'un nombre aléatoire chiffré à partir du nombre aléatoire unique en utilisant la clé de chiffrement,
5.transmission, par le dispositif « oracle » (40), du nombre aléatoire unique, via un canal de communication sécurisé, au pair « vérifier » (30),
6.publication, par le dispositif « oracle » (40), du nombre aléatoire chiffré dans le registre(50),
7.génération, par le pair « vérifier » (30), d'un challenge à partir du nombre aléatoire unique en utilisant la clé publique,
8.publication, par le pair « vérifier » (30), du challenge dans le registre (50),
9.génération, par le pair « attester » (20), d'une preuve contenant le nombre aléatoire en résolvant le challenge grâce à la clé privée,
10.publication, par le pair « attester » (20), de la preuve dans le registre (50),
11. après la publication de la preuve dans le registre (50), publication, par le dispositif « oracle » (40), de la clé de chiffrement dans le registre (50).

2. Procédé d'attestation selon la revendication 1 dans lequel le registre (50) est un registre de chaine de blocs.

3. Procédé selon la revendication 2 dans lequel les étapes 2 à 6 et 9 à 11 sont déclenchées par un des pairs du réseau de pairs via l'envoi d'une transaction vers un contrat intelligent déployé dans la chaine de blocs.

4. Procédé d'attestation selon l'une des revendications précédentes dans lequel le pair « attester » (20) comporte un composant matériel de sécurité et dans lequel la génération de la paire de clés asymétrique de l'étape 1 est réalisée en utilisant le composant matériel de sécurité.

5. Procédé selon la revendication 4 dans lequel le composant matériel de sécurité est un composant TPM et dans lequel l'étape 1 comporte la génération d'une clé d'endossement et d'une clé d'attestation en utilisant le composant TPM.

6. Procédé d'attestation selon l'une des revendications précédentes dans lequel le dispositif « oracle » (40) est un pair du réseau de pairs.

7. Procédé d'attestation selon les revendications 1 à 5 dans lequel le pair « vérifier » (30) comporte le dispositif « oracle » (40) dans une application embarquée dans une zone de confiance.

8. Procédé de vérification à distance décentralisé, vérifiant l'authenticité d'un pair « attester » (20) au sein d'un réseau de pairs partageant un registre, impliquant un pair « vérifier » et comportant les étapes suivantes :
12.attestation du pair « attester » (20) selon le procédé d'attestation de l'une des revendications précédentes,
14.vérification, par le pair « vérifier » (30), de la postérité de la publication de la clé de chiffrement dans le registre (50) par rapport à la publication de la preuve dans le registre (50),
15.calcul du nombre aléatoire, par le pair « vérifier » (30), à partir du nombre aléatoire chiffré en utilisant la clé de chiffrement,
16.vérification, par le pair « vérifier » (30), de la présence du nombre aléatoire dans la preuve,
17.génération, par le pair « vérifier » (30), d'un challenge de contrôle à partir du nombre aléatoire en utilisant la clé publique,
18.vérification, par le pair « vérifier » (30), de la correspondance entre le challenge de contrôle et le challenge.

9. Procédé de vérification à distance décentralisé, vérifiant l'authenticité d'un pair « attester » (20) au sein d'un réseau de pairs partageant un registre, le pair « attester » (20) comporte un composant matériel de sécurité TPM, le procédé de vérification implique un pair « vérifier » (30) et comporte les étapes suivantes :
12.attestation du pair « attester » (20) selon le procédé d'attestation de la revendication 5,
13.vérification, par le pair « vérifier » (30), d'une certification de la clé d'endossement auprès d'une infrastructure publique de clé,
14. vérification, par le pair « vérifier » (40), de la postérité de la publication de la clé de chiffrement dans le registre par rapport à la publication de la preuve dans le registre,
15.calcul du nombre aléatoire, par le pair « vérifier » (30), à partir du nombre aléatoire chiffré en utilisant la clé de chiffrement,
16.vérification, par le pair « vérifier » (30), de la présence du nombre aléatoire dans la preuve,
17.génération, par le pair « vérifier » (30), d'un challenge de contrôle à partir du nombre aléatoire en utilisant la clé publique,
18.vérification, par le pair « vérifier » (30), de la correspondance entre le challenge de contrôle et le challenge.
